# EUROPEAN PATENT APPLICATION

(11) **EP 3 797 927 A1**
(43) Date of publication of application: **31.03.2021**
(21) Application number: 19020547.6
(22) Date of filing: 27.09.2019
(51) Int. Cl.: B24B 13/005, B24B 13/00, B24B 9/14

(54) **OPTICAL ELEMENT POSITIONING AND BLOCKING DEVICE AND METHOD RELATED TO THE DEVICE**

(71) Applicant: ESSILOR INTERNATIONAL, 94220 Charenton-Le-Pont (FR)
(72) Inventor: PINAULT, Sébastien, 94220 Charenton le Pont (FR); MOINE, Jérôme, 94227 Charenton-Le-Pont (FR); MARTIN, Luc, 94227 Charenton-Le-Pont (FR); BULTEZ, Xavier, 94227 Charenton-Le-Pont (FR); HO, Caroline, 94227 Charenton-Le-Pont (FR)
(74) Representative: Korakis-Ménager, Sophie

(57) **Abstract**

A blocking device for positioning and blocking an optical element to an insert at a given position, comprising an insert having a surface intended to be blocked against a face (1a) of the optical element with a glue material, the insert being positioned in respect with a blocking station; at least three pins to support the optical element at the given position, wherein the height of the extremity of each pin is adjustable independently of each other, the extremities being configured to position the optical element at the given position; and a locking device to hold the position of the optical element at the given position while the glue material is solidifying, the locking device comprising a lock associated with each pin.

## Description

### FIELD

This invention relates to a device for use in positioning and blocking an optical element to an insert employed with machining, grinding and processing equipment in the generation of optical, namely ophthalmic, lenses and a method related to the device.

### BACKGROUND

The process of preparing optical or ophthalmic lenses begins usually with an unfinished or semi-finished glass or plastic lens blank. Typically, a semi-finished lens blank has a finished polished front surface and an unfinished back surface. By grinding away material from the back surface of the lens blank the required corrective prescription is generated. Thereafter the surface having had the corrective prescription imparted thereto is polished and the peripheral edge of the thus processed lens blank is provided with a final desired contour thereby establishing a finished optical or ophthalmic lens. According to other processing methods, the finished ophthalmic lens can be directly processed from a lens blank using for example three directional machining.

It is necessary during these various processing operations to securely maintain the lens blank in accurate alignment and in place on the blocking device.

Heretofore various materials were employed to secure the lens blank to the lens blocking device. These materials include glues, pitch and low temperature fusible metal alloys. The use of low temperature metal alloys causes significant environmental and health hazards especially since these alloys are most often fabricated from such metals as cadmium, tin, lead and bismuth.

To overcome these issues, organic low shrinkage materials and alloy free glue material have been developed to be used as lens blocking materials.

For example, Application US 6,036,313 in the name of 3M Innovative Properties Company discloses examples of compound families suitable for lens blocking with thermoplastic materials. The disclosed blocking compositions have many advantages over traditional metal alloy materials. For example, the lens blocking compositions are non-toxic, environmentally safe, and preferably biodegradable. The materials can be used with existing processing equipment and may be recycled.

US 6,036,313 discloses also a method of holding an ophthalmic lens blank, comprising the steps of:
providing an ophthalmic lens block comprising a solidified mass of a thermoplastic blocking composition, and preferably comprising a heat absorbing material;
heating the surface of the lens blocking composition to its melting or softening point;
positioning a lens blank against the softened surface of the lens blocking composition; and
allowing the composition to solidify.

However, the inventors have noticed that the solution disclosed in US 6,036,313 suffers of drawbacks such as low throughput. Indeed, because of the solidifying time of the alloy free glue material and because of the inadaptability of the blocking device for a prism, the throughput of such blocking process is very low compared to the throughput of blocking process using low temperature metal alloys, in particular in the case of prescription including a prism.

Accordingly, there is a need for optimizing the throughput of manufacturing process using alloy free glue material.

Thus, the goal of the present disclosure is to improve the throughput of manufacturing process using alloy free glue material in order to increase the number of optical element manufactured in a given time while ensuring the quality, the accuracy and the flexibility of the manufactured lens.

### SUMMARY

This obtained according to the present disclosure by a blocking device for positioning and blocking an optical element to an insert at a given position, comprising
an insert having a surface intended to be blocked against a face of the optical element with a glue material, the insert being positioned in respect with a blocking station;
at least three pins to support the optical element at the given position;
wherein the height of the extremity of each pin is adjustable independently of each other, the extremities being configured to position the optical element at the given position; and
a locking device to hold the position of the optical element at the given position while the glue material is solidifying, the locking device comprising at least three locks associated with each pin.

Advantageously, this device allows to position and to block with a same and simple device while obtaining a very good accuracy of the position of the optical element. Indeed, thanks to the pins with independently adjustable height, the device allows to position with precision the optical element directly above the insert. Thus, the process is simplified and the time for blocking is significantly reduced. For example, we can drop the glue on the insert (between the pins) and manually press the glue with the lens to reach final blocking position when the front surface touches the pins.

According to further embodiments which can be considered alone or in combination, the at least three pins are equally distributed at the periphery of the insert inside or outside the insert.

In the sense of the present disclosure, the "periphery of the insert inside the insert" means that the pins go through the insert. Advantageously, when the at least three pins are distributed inside the insert, the blocking device has a reduce size.

In the sense of the present disclosure, the "periphery of the insert outside the insert" means that the pins are outside the insert and that the pins may be or not in contact with the insert. Advantageously, this embodiment may allow avoiding contact between the pins and the glue material.

According to further embodiments which can be considered alone or in combination, the blocking device comprises at least three pushers associated with each pin, the at least three pushers being configured to push independently each pin in order to adjust the height of the extremity of each pin.

The pusher may be rods, retractable rods or any means for adjusting the heights of the extremity of the least three pins.

According to further embodiments, the blocking device comprises a cooling device configured to solidify the glue material in order to block the surface of the insert against a face of the optical element.

The cooling device may be a cold air gun, a Peltier module or a water gun or any device which allows solidifying partially or totally the glue material.

The cooling device allows the optical element to be enough stable on the insert to be transferred and then the glue material to be solidified totally in another processing station. Also, the cooling device allows the optical element to be directly blocked on the blocking station.

Advantageously, in both case, it allows to optimize the throughput by accelerating the solidification or by freeing up the blocking station while maintaining the given position.

According to further embodiments, the blocking device comprises an intermediate movable element disposed between the insert and the blocking station. The intermediate movable element is configured to move the optical element positioned on the at least tree pins, to another manufacturing station.

The intermediate movable element may comprise the at least three pins and/or the locking device. Alternatively, the at least three pins and/or the locking device may be arranged on/under the intermediate movable element.

According to further embodiments, the locking device comprises further a clamp to hold the position of the optical element at the given position while the glue material is totally or partially solidifying.

The clamp may be dependent or independent on the intermediate movable element.

The clamp may be disposed on the opposite face of the blocked face of the optical element or around the optical element.

The intermediate movable may be any device disposed to support the insert and to block the insert into the blocking device and allow to transfer or to move the blocking device. For example, the intermediate movable may be a trail or a carrousel or a conveyor.

In the case wherein the glue material is a thermoplastic material, by definition thermoplastic material needs cooling time to return to solid state. This cooling step is the longest step in the process and accounts for over 50% of process time. Advantageously, by using an intermediate movable element which allows to transfer the optical element to another station such as a cooling station, waiting station or manufacturing station, the blocking head is freed up, thereby allowing another optical element to be blocked.

Thus, thanks to the parallelism of the manufacturing steps obtained with the device disclosed in the present description, the throughput is significantly increased and the alloy free glue material, in particular thermoplastic blocking technology, becomes much more competitive.

Moreover, the disclosed blocking device has a configuration optimized allowing positioning, blocking and transferring with a same device while keeping the given position thanks to the at least three pins.

According to a second aspect, the disclosure relates to a manufacturing device comprising at least one blocking device as described in the present disclosure. A such manufacture device present all the advantage cited above.

According to a third aspect, the disclosure relates to a method for positioning and blocking an optical element on an insert at a given position at a blocking station, comprising:
providing a blocking device, the insert of the blocking device being positioned in respect with a blocking station;
providing a glue material at a melted state on the insert;
positioning with said blocking device, the optical element onto the glue material; and
allowing the provided glue material to solidify in order to block the optical element in the given position.

According to another embodiment, the method for positioning and blocking an optical element comprises:
providing the blocking device as described in the present disclosure, the insert of the blocking device being positioned in respect with the surface of a blocking station;
determining the height of the extremities of each pin for positioning the optical element at the given position;
translating independently the height of the extremity of each pin into the determined heights;
locking the height of the extremity of each pin;
providing a glue material at the melted state on the insert;
positioning the optical element on the extremities of the at least three pins onto the provided glue material, and
allowing the glue material to solidify in order to block the optical element in the given position.

According to further embodiments which can be considered alone or in combination, the positioning step may be manual or automatic.

In one or more embodiments, the method for blocking and positioning an optical element on an insert at a given position at a blocking station, comprising further the transfer of the optical element with the insert from the blocking station to another station.

In one or more embodiments, the method comprises further holding the optical element with the clamp of the blocking device in order to hold the position of the optical element on the insert at the blocking station or during the transferring step.

The another station may be a waiting station or a cooling station or another blocking station or a manufacturing station.

According to another embodiment, the disclosure relates to a method for blocking an optical element on an insert at a given position at a blocking station, comprising further pre-solidifying of the thermoplastic material. Thus the optical element is blocked quickly on the insert or the optical element is blocked enough on the insert to ensure stable transfer of the optical element with the insert and to avoid the optical element to be misaligned in respect with the insert.

According to another embodiment, when the optical element is partially blocked to the insert the method may comprise further estimating the rigidity of the thermoplastic material in order to know if the optical element is enough blocked on the insert to ensure stable transfer of the optical element with the insert and to avoid the optical element to be misaligned in respect with the insert. Reference curve representing the glue material solidifying as function of the time may be used.

According to a fourth aspect, the disclosure relates to a method for manufacturing at least two optical elements comprising:
providing a first blocking device as described in the present disclosure, at a blocking station;
positioning and blocking a first optical element by using the first blocking device;
moving the first optical element positioned on the extremities of the at least three pins to another manufacturing station by using the intermediate movable element of the first blocking device;
providing a second blocking device as described in the present disclosure, at the blocking station;
positioning and blocking a second optical element by using the second blocking device while the thermoplastic material is solidifying to block the first optical element to the insert of the first blocking device on said another station.

This method allows the task to be parallelized, in other words, to make several task in the same time. Thus, for example, while the glue material solidifies to block a first optical element on a first insert, a second optical element is positioned and blocked on a second insert.

Advantageously, the task parallelism allows the throughput to be significantly increased and the alloy free glue blocking technology to become much more competitive.

According to another embodiment, the method for manufacturing an optical element comprise further deblocking the manufactured optical element from the insert by unlocking the at least three pins and increasing the height of the extremities of the at least three pins.

The manufactured optical element may be deblocked on a deblocking station or on the blocking station.

Advantageously, this method allows to position, to block to transfer and to deblock with a same and simple device.

In the present disclosure, the glue material is an alloy free glue material such as a liquid/gel UV curable resin which hardens when exposed to Ultra Violet light or a thermoplastic material layer that can melt or soften when being heated. Alternatively, the device and the method may be used in blocking vacuum systems. A thermoplastic material can be remelted or softened when heated and remoulded when cooling after melting or softening. Most thermoplastics are high molecular weight polymers whose chains associate through weak van der Waals forces (polyethylene); strong dipole-dipole interactions and hydrogen bonding (nylon); or even stacking of aromatic rings (polystyrene). Many thermoplastic materials are addition polymers; e.g., vinyl chain-growth polymers such as polyethylene and polypropylene. The thermoplastic material may also comprise additives (such as, for example, plasticizers, stabilizers, pigments, ...) and/or fillers (such as mineral and / or organic fillers, as for examples boron, carbon, clay, glass, cellulose, metals, oxides, aramide, polyamide, ...; fillers may be of different geometry, such as for example grains, lamella, short or long fibers, ...).

In the present disclosure, an "optical element" may be an optical lens, a lens which surfaces have already been machined, a semi-finished lens blank with a polished front surface, a lens blank with two unfinished surfaces.

The optical element can be made for example, but not limited to, of plastic or glass. More generally, any combination of material suitable to obtain an optical system may be used. One or two surfaces of the optical lens may be coated.

Thus an "optical element" can be every optical part that needs to be machined, as for example to be surfaced and/or cut and/or grinded and/or polished and/or edged and/or engraved, in order to provide a machined optical lens.

According to the present disclosure, an "insert" may be an optical element holding unit employed with machining, grinding, and processing equipment in the generation of optical.

A fully machined optical lens is for example an ophthalmic lens which surfaces form an optical system that fits a desired prescription. Said machined optical lens can be edged when blocked according to the present invention or edged in a further processing step, as for an example edged by an eye care practitioner.

The wording "upper" or "on" and "bottom" or "under" indicates positions relative to the ophthalmic lens component when it is arranged so as the edge of the ophthalmic lens component to be machined is substantially situated in a horizontal plane.

Said position is purely conventional and the ophthalmic lens component can be machined in a non-horizontal position.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG.1A, FIG.1B, FIG.1C and FIG.1D are a schematic side views and back views of a blocking device according to two examples of the present description.
FIG.2 is a schematic view of a blocking device according to one example of the present description.
FIG.3 is a schematic view of a blocking device according to one example of the present description.
FIG.4 is a schematic functional diagram of the method for positioning and blocking at least one optical element according to one example of the present description.
FIG.5A, FIG.5B, FIG.5C, FIG.5D, FIG.5E illustrate some steps of the method for positioning and blocking at least one optical element according to one example of the present description.
FIG.6 illustrates some steps of the method according to one example of the present description.

Skilled artisans appreciate that elements in the figures are illustrated for simplicity and clarity and have not necessarily been drawn to scale. For example, the dimensions of some of the elements in the figures may be exaggerated relative to other elements to help improve the understanding of the embodiments of the present invention.

### DETAILED DESCRIPTION OF EMBODIMENTS

In the description which follows the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

To avoid unnecessary details for practicing the invention, the description may omit certain information already known to those skilled in the art.

Skilled artisans appreciate that elements in the figures are illustrated for simplicity and clarity and have not necessarily been drawn to scale. For example, the dimensions of some of the elements in the figures may be exaggerated relative to other elements to help improve the understanding of the embodiments of the present invention

The wording "upper" or "on" and "bottom" or "under" indicates positions relative to the ophthalmic lens component when it is arranged so as the edge of the ophthalmic lens component to be machined is substantially situated in a horizontal plane.

Said position is purely conventional and the ophthalmic lens component can be machined in a non-horizontal position.

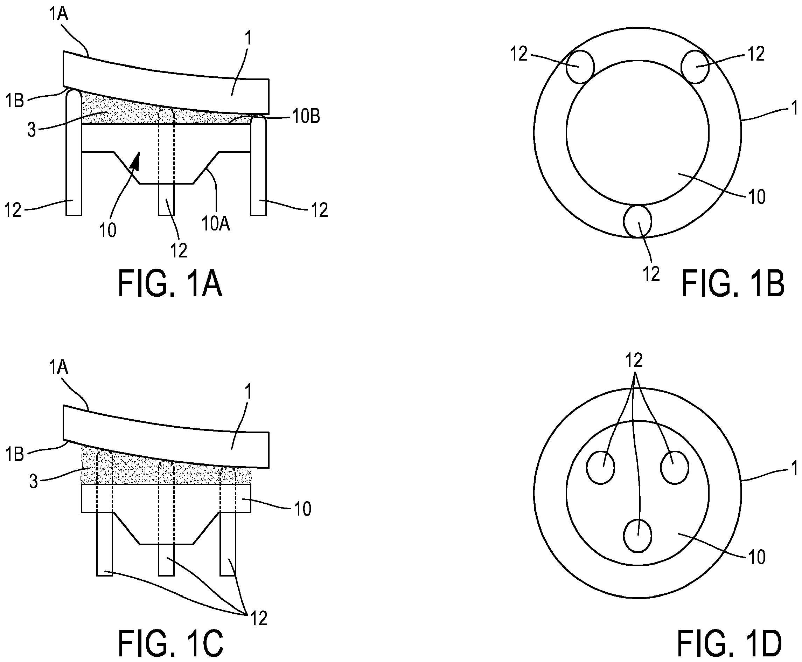

As shown on FIGS. 1A, 1B, 1C and 1D, an optical element 1 is secured in a given position on an insert 10 of a blocking device thanks to a glue material 3. The edge of the optical element 1 is substantially situated in a horizontal plane in a given orientation. The blocking device comprises the insert 10, at least three pins 12 to support the optical element 1 at the given position and a locking device (not shown on the figures 1) to hold the position of the optical element at the given position.

The pins 12 can have various geometry. The pins can comprise, for example, a cylindrical body that is extended by a spherical surface head.

As shown on FIGS 1A and 1B, the pins 12 are equally distributed at the periphery of the insert outside the insert. As shown on FIGS 1C and 1D, the pins 12 are equally distributed at the periphery of the insert inside the insert.

For example, three pins 12 may be disposed on the periphery of a 53.5 millimeters diameter circle at 120° from each other inside the insert.

The height of the extremity of each pin 12 is adjustable independently of each other. The height is configured to position the optical element at the given position.

In other words, the optical lens is placed on the pins which are vertically translated into a position (Z1, Z2, Z3), so that, when the optical lens is placed on the plurality of at the pins, the optical lens is oriented in a given position for manufacturing the lens with a surfaces form that fits with a desired prescription.

The height of the extremity of each pin may be translated thanks to pushers associated to each pin in order to adjust the height independently. The pusher may be for example rod or retractable rod or pull pusher or any means which allows to adjust, increase or decrease the height of the extremity of the pins.

The pusher may be comprised in the blocking station or in the blocking device.

The upper surface 1A of the optical element 1 is a surface to be machined, as for an example to be grinded and/or polished. The optical element 1 can be further edged.

The bottom surface 1B of the optical element 1 contacts the upper surface of the glue material 3 and the extremities of the pins 12.

According to the present invention, an "optical element" may be an ophthalmic lens component such as an ophthalmic lens which surfaces have already been machined, a semi-finished ophthalmic lens blank with a polished front surface, an ophthalmic lens blank with two unfinished surfaces.

The optical element can be made for example, but not limited to, of plastic or glass. More generally, any combination of material suitable to obtain an optical system may be used. One or two surfaces of the optical lens may be coated.

Thus an "optical element" of the description can be every optical part that needs to be machined, as for example to be cut and/or grinded and/or polished and/or edged and/or engraved, in order to provide a machined ophthalmic lens.

A fully machined ophthalmic lens according to the present invention is for example an optical element such as an ophthalmic lens which surfaces form an optical system that fits a desired prescription. Said machined ophthalmic lens can be edged when blocked according to the present invention or edged in a further processing step, as for an example edged by an eye care practitioner.

According to an embodiment, the optical element 1 is a semi-finished lens blank and the bottom surface 1B is a finished optical surface.

As for an example, the external diameter of the optical element 1 is between 50 mm and 100 mm, for example equal to 80 mm. On the FIGS 1A to 1D, the diameter of the optical element is superior to the diameter of the insert. According to another embodiment the diameter of the optical element, may be equal to the diameter of the insert.

The insert 10 is a block, for example metallic polymeric materials clear or opaque with or without fillers which comprises a bottom part 10A and an upper part 10B. The surface 1A of the insert 10 may be flat or curved.

The lower part 10A of the insert comprises means to orientate the insert 10 in corresponding orientating means of a tool (not represented) of a lens machining unit such as a lathe or another movement inducing machine. The tool may be a chuck or another fixing tool.

The bottom part 10A of the insert 10 may also comprise a central part which is a cylindrical part to be squeezed by the fixing tool of the machining unit.

The blocking device may comprise a reference frame, the reference frame being configured to position the insert in respect to the blocking station.

According to an embodiment of the invention, the glue material 3 may be arranged between the insert surface 10B and the bottom surface 1B of the optical element 1.

The glue material consists of UV-curable resin or thermoplastic material.

The UV-curable resin has advantages such as non-toxic, environmentally safe and fast curing.

The thermoplastic materials have many advantages over traditional metal alloy materials. For example, the thermoplastic materials are non-toxic, environmentally safe, and for example biodegradable and reusable. The thermoplastic materials may comprise a homopolymer or copolymer of epsilon-caprolactone, and for example has a number average molecular weight of at least 3,000, a mean bending modulus of at least 69 MPa at 21 °C., or a mean flexural strength of at least 1 MPa at 21 °C. The composition is solid at 21 °C. and has a sufficiently low melting or softening point such that the composition may be placed adjacent to an ophthalmic lens blank at its melting or softening point without damaging the lens blank. The composition also has sufficient adhesion to an optical element or to an optical lens coating or tape to hold the optical element during a machining procedure.

According to another embodiment, the blocking device comprises an intermediate movable element. The intermediate movable element is configured to move the optical element placed on the pins and on the glue material which was poured on the insert.

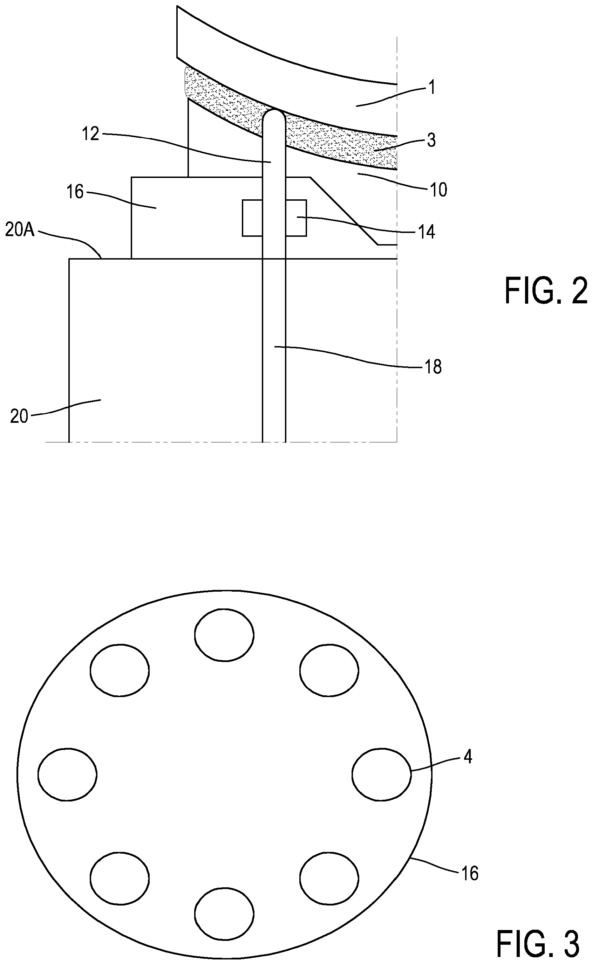

As illustrated FIG.2, the intermediate movable element 16 may comprise the at least three pins 12 and the locking device 14.

Alternatively, the at least three pins and/or the locking device may be arranged on/under the intermediate movable element.

The locking device may comprise further a clamp to hold the position of the optical element at the given position while the glue material is totally or partially solidifying. Moreover, the clamp 19 may allow holding the position of the optical element 1 at the given position while the intermediate movable element 16 is moving to another manufacturing station.

The clamp 19 may be arranged around the optical element or on the opposite face 1A of the blocked face 1B of the optical element 1.

The clamp 19 may be arranged around the optical element or on the opposite face 1A of the blocked face 1B of the optical element 1.

The clamp may be dependent or independent on the intermediate movable element.

The clamp may be a pin, several pins or grippers, suction cups.

The clamp may be arranged in order to stabilize the position of the optical element, for example at the center of the optical element.

According to another embodiment, as illustrated in FIG.3 the intermediate movable element 16 is a carrousel. When the carrousel 16 turns, the optical element placed on the pins and on the glue material which was poured on the insert, turns also to switch to another manufacturing station 4 such as a waiting station or a cooling station or a manufacturing station.

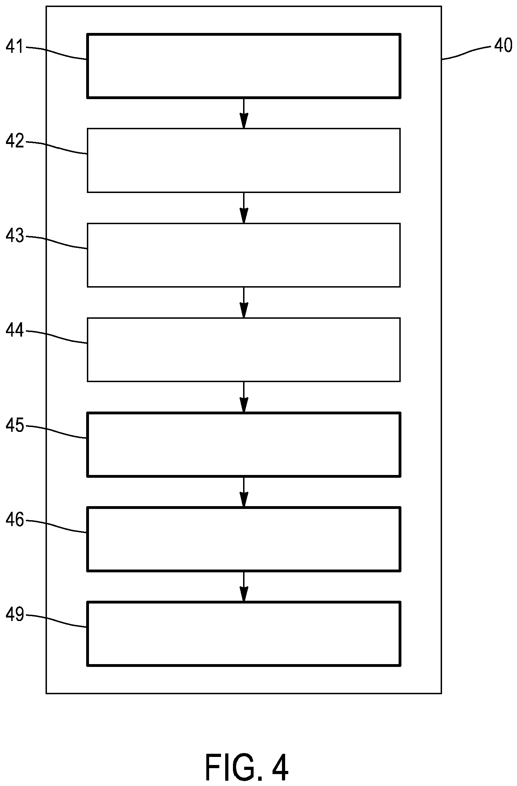

According to the method of the present disclosure, as illustrated by the bold frame of the FIG.4, the main step of the method of the present disclosure for positioning and blocking an optical element on an insert at a given position at a blocking station, comprising:
providing 41 a blocking device, the insert of the blocking device being positioned in respect with a blocking station;
providing 45 a glue material at a melted state on the insert;
positioning 46 with said blocking device, the optical element onto the glue material; and
allowing 49 the provided glue material to solidify in order to block the optical element in the given position.

As explained below, the glue material is alloy free glue material such as UV curable resin or thermoplastic material.

According to an embodiment of the present disclosure, the method consists in positioning an optical lens 1 in a given position and placed on a plurality of pins 12. The pins are vertically translated into a position so that when the optical lens is placed on the plurality of pins, the optical lens is oriented in a given position.

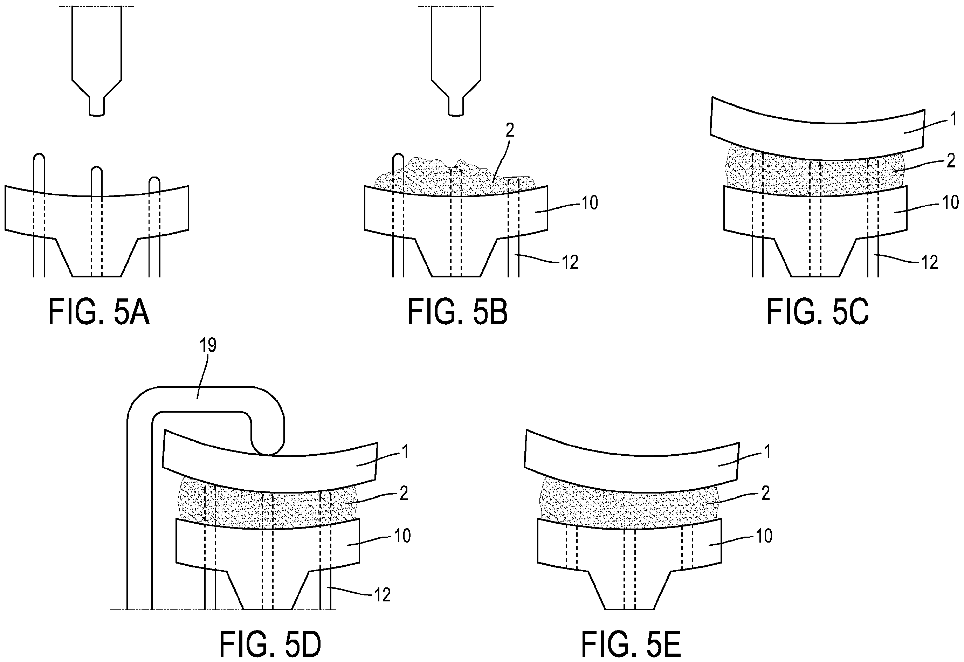

As is illustrated in FIG.3 and FIGS.5A to 5D, the method for positioning and blocking an optical element comprises:
providing 45 the blocking device as described in the present disclosure, the insert of the blocking device being positioned in respect with the surface of a blocking station;
determining 42 the height of the extremities of each pin for positioning the optical element at the given position;
translating 43 independently the height of the extremity of each pin into the determined heights;
locking 44 the height of the extremity of each pin;
providing 45 a glue material at the melted state on the insert;
positioning 46 the optical element on the extremities of the at least three pins onto the provided glue material, and
allowing 49 the glue material to solidify in order to block the optical element in the given position.

According to further embodiments which can be considered alone or in combination, the positioning step may be manual or automatic.

It has to be understood that the method according to the invention can be used at different stage of the manufacturing process of an optical lens, for example but not limited to, a cribbing step, a surfacing step, a roughing step, a fining step, a coating or spin coating step, an edging step, a grinding step, a polishing step.

The FIG.5A illustrates the step of providing the blocking device 41, the step of determining 42 the height of the extremities of each pin for positioning the optical element at the given position and the step of translating 43 the pins.

After providing the blocking device, the positions Z1, Z2, Z3 of the pins 12, in other words the height of the extremity of each pin, can be, for example, determined by using a software having as entry parameter: prescription data, such as prismatic value, and/or design data, describing the geometrical properties of the surface of the lens in particular those of the convex surface of a semi-finished lens, and/or pin data, such as the geometry of the pins and the position of the pins, and/or positioning data, defining the position of the optical lens 1 relatively to the pins 12.

The design data according to the invention may be calculated or selected taking into account wearer's parameters such as the wearer's prescription and/or a chosen spectacle frame and/or esthetical criteria and/or morphologic criteria.

The positions Z1, Z2, Z3 of the pins 12, in other words the height of the extremity of each pin, are computed such that, when the optical lens 1 is placed on the extremity of the pins 1 in their position Z1, Z2, Z3; the prism of the optical lens 1 correspond to the desired prism. The software is thus arranged to first calculate the resulting prism, corresponding to the center of the optical lens 1 when being placed on the pins 12 and when the center of the spherical surface head of the pins 12 are aligned on the same horizontal line. The resulting prism can be, for example, calculated by the software using the design data, the pin data and the positioning data. Then the software is arranged to calculate the desired vertical position Z1, Z2, Z3 of each of the pins 12, in other words the height of the extremity of each pin, by using the resulting prism and the prescription data.

The desired vertical position Z1, Z2, Z3 of the pins 12 corresponds to position of each of the pins 12 so as to have the prism of the optical lens which is equal to the desired prism. Therefore, each of the pins 12 can be translated in the thus calculated positions Z1, Z2, Z3 so that the optical lens can finally be oriented in order to have the desired prism.

Then the height of the extremity of each pin 10 is locked (not shown).

Afterwards, as illustrated in FIG.5B, a glue material 2 at the melted state is provided on the insert 12.

In the case of thermoplastic material, the thermoplastic material is heated at a temperature at which at least a part of the thermoplastic material flows under moderate pressure.

As illustrated in Fig. 5C, the optical element 1 may be manually or automatic positioned by the operator on a plurality, for example three, of pins 12.

According to another embodiment, when the optical element 1 is automatic, it can be realized with a suction pad or a suction cup, gripper.

Thus, when the pins 12 are in the position the face 1AB of the optical lens 1, for example the convex surface can be placed on the pins 12.

More specifically, the optical lens 1 can be placed on the pins 12, by adjusting the position of the optical lens 1 such that the periphery of the optical lens 1 coincides with a reference line on the blocking device or on the blocking station.

Another way, the optical lens 1 can be placed on the pins 12, by adjusting the position of the optical lens 1 such that the periphery of the optical lens 1 image-sensed by a CCD camera coincides with the reference line displayed on the same monitor that displays the optical lens 1, thus securing the positioning accuracy.

After the previous positioning step, the method according to the present embodiment comprises a solidifying step, in which the glue material 3 solidifies.

The solidifying of the glue material may be active, for example using UV or water cooling or air cooling, or passive, for example heat exchange with ambient air.

A blocking system according to the invention may comprise means for cooling the blocking material 14 (not shown on FIG. 4), such as water cooling means.

In one or more embodiments, the method for blocking and positioning an optical element on an insert at a given position at a blocking station, comprising further the transfer of the optical element with the insert from the blocking station to another station.

According to another embodiment, the disclosure relates to a method for blocking an optical element on an insert at a given position at a blocking station, comprising further pre-solidifying of the thermoplastic material. Thus the optical element is blocked quickly on the insert or the optical element is blocked enough on the insert to ensure stable transfer of the optical element with the insert and to avoid the optical element to be misaligned in respect with the insert.

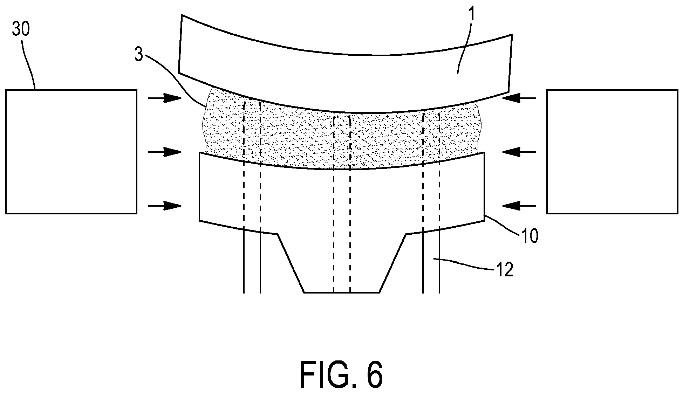

The pre-solidifying step may be realized thanks to a cooling device such as a cold air gun or a Peltier device. The FIG.6 illustrates this embodiment, the cold air gun 30 are disposed around the blocking device to cool the glue material 3 in order to block the optical element 1 positioned thanks to the pins 12 on the insert 10.

In one or more embodiments, the method comprises further holding the optical element with the clamp of the blocking device in order to hold the position of the optical element on the insert at the blocking station or during the transferring step. This embodiment is illustrated in FIG.5D wherein the clamp 19 is positioned on the face 1A of the optical element. The holding step allows more accuracy in the position of the optical element and to ensure stable transfer of the optical element with the insert.

Afterwards, when the glue material is at the solid state, if there is a clamp, the clamp may be remove.

Then as illustrated in FIG.5E, the pins may be removed to the insert in order to manufacture or to manipulate to optical element maintained in the given position on the insert. To remove the pins, in particular to make down the pins, is possible for example to use the pusher or to do it manually.

When the optical element is manufactured, the method may comprise the step of deblocking the manufactured optical element from the insert by unlocking the heights of the at least three pins, and increasing the height of the extremities of the at least three pins in order to push the optical element.

The step of increasing the height of the extremities of the at least three pins may be realized thanks to the pusher.

The manufactured optical element may be deblocked on a deblocking station or on the blocking station.

Thus, the present method and device present an important advantage to allow with a device positioning, transferring, blocking and deblocking.

According to a third aspect, the disclosure relates to a method for manufacturing at least two optical elements comprising:
providing a first blocking device as described in the present disclosure, at a blocking station;
positioning and blocking a first optical element by using the first blocking device;
moving the first optical element positioned on the extremities of the at least three pins to another manufacturing station by using the intermediate movable element of the first blocking device;
providing a second blocking device as described in the present disclosure, at the blocking station;
positioning and blocking a second optical element by using the second blocking device while the thermoplastic material is solidifying to block the first optical element to the insert of the first blocking device on said another station.

Advantageously, the task parallelism allows the throughput to be significantly increased and the alloy free glue blocking technology to become much more competitive.

Although representative processes and devices have been described in detail herein, those skilled in the art will recognize that various substitutions and modifications may be made without departing from the scope of what is described and defined by the appended claims.

## Claims

1. A blocking device for positioning and blocking an optical element (1) to an insert at a given position, comprising
an insert (10) having a surface (10a) intended to be blocked against a face (1a) of the optical element (1) with a glue material (3), the insert (10) being positioned in respect with a blocking station;
at least three pins (12) to support the optical element (1) at the given position;
wherein the height of the extremity of each pin (12) is adjustable independently of each other, the extremities being configured to position the optical element (1) at the given position; and
a locking device to hold the position of the optical element (1) at the given position while the glue material (3) is solidifying, the locking device comprising a lock (14) associated with each pin (12).

2. A blocking device for positioning and blocking an optical element (1) according to claim 1, wherein the at least three pins (12) are equally distributed at the periphery of the insert (10) inside or outside the insert (10).

3. A blocking device for positioning and blocking an optical element (1) according to any of claims 1 to 2, comprising further:
a cooling device (30) configured to solidify the glue material (3) in order to block the surface (10a) of the insert (10) against a face (1 a) of the optical element (1).

4. A blocking device for positioning and blocking an optical element (1) according to any of claims 1 to 3, comprising further:
an intermediate movable element (16) disposed between the insert (10) and the blocking station (20),
wherein the intermediate movable element (16) is configured to move the optical element positioned on the at least tree pins (12), to another manufacturing station (4).

5. A blocking device for positioning and blocking an optical element (1) according to any of claims 1 to 4, wherein the locking device comprises further a clamp (19) to hold the position of the optical element at the given position while the glue material is totally or partially solidifying.

6. A blocking device for blocking an optical element according to any of claims 4 or 5, wherein the intermediate movable element (16) is a carrousel.

7. A manufacturing device comprising at least one blocking device for positioning and blocking an optical element (1) to an insert at a given position, comprising
an insert (10) having a surface (10a) intended to be blocked against a face (1a) of the optical element (1) with a glue material (3), the insert (10) being positioned in respect with a blocking station;
at least three pins (12) to support the optical element (1) at the given position;
wherein the height of the extremity of each pin (12) is adjustable independently of each other, the extremities being configured to position the optical element (1) at the given position;
a locking device to hold the position of the optical element (1) at the given position while the glue material (3) is solidifying, the locking device comprising a lock (14) associated with each pin (12); and
an intermediate movable element (16) configured to be disposed between the insert (10) and the blocking station (20),
wherein the intermediate movable element is configured to move the optical element positioned on the at least tree pins, to another manufacturing station (4).

8. A method for positioning and blocking an optical element (1) to an insert (10) at a given position with a thermoplastic material, comprising:
providing (41) a blocking device, the insert of the blocking device being positioned in respect with the surface of a blocking station;
providing (45) a glue material at the melted state on the insert (10);
positioning (46) with said blocking device, the optical element (1) onto the provided glue material; and
allowing (49) the glue material to solidify in order to block the optical element (1) in the given position.

9. A method for positioning and blocking an optical element (1) according to claim 8, wherein the blocking device comprises an insert (10) having a surface (10a) intended to be blocked against a face (1a) of the optical element (1) with a glue material (3), the insert (10) being positioned in respect with a blocking station;
at least three pins (12) to support the optical element (1) at the given position;
wherein the height of the extremity of each pin (12) is adjustable independently of each other, the extremities being configured to position the optical element (1) at the given position;
a locking device to hold the position of the optical element (1) at the given position while the glue material (3) is solidifying, the locking device comprising a lock (14) associated with each pin (12),
the method comprising:
providing (41) the blocking device, the insert of the blocking device being positioned in respect with a blocking station;
determining (42) the height of the extremity of each pin (12) for positioning the optical element (1) at the given position;
translating (43) independently the height of the extremity of each pin (12) into the determined heights;
locking (44) the height of the extremity of each pin (12);
providing (45) a glue material at the melted state on the insert (10);
positioning (46) the optical element (1) on the extremities of the at least three pins (12) onto the glue material, and
allowing (49) the glue material to solidify in order to block the optical element (1) in the given position.

10. A mehod for positioning and blocking an optical element according to any of claims 8 or 9 wherein said positioning (46) the optical element (1) is manual or automatic.

11. A method for positioning and blocking an optical element according to any of claims 8 to 10, comprising further, after said positioning (46) the optical element (1),
holding (47) the optical element with the clamp (19) of the blocking device according to claim 5.

12. A method for positioning and blocking an optical element (1) to an insert (10) at a given position according to any of claims 8 to 11, comprising before allowing (49) the glue material to solidify in order to block the optical element:
transferring (48) the optical element with the insert from the blocking station to another station (4) by using the blocking device according to claim 4.

13. A method for positioning and blocking an optical element (1) to an insert (10) at a given position according to any of claims 8 to 12, comprising:
pre-solidifing (50) of the glue material (3) with a cooling device.

14. A method for positioning and blocking at least two optical elements comprising:
providing a first blocking device according to any of claims 4 to 6, at a blocking station;
positioning and blocking a first optical element by using the first blocking device;
moving the first optical element positioned on the extremities of the at least three pins to another manufacturing station by using the intermediate movable element of the first blocking device;
providing a second blocking device according to any of claims 4 to 6, at the blocking station;
positioning and blocking a second optical element by using the second blocking device while the glue material is solidifying to block the first optical element to the insert of the first blocking device on said another station.

15. A method for manufacturing an optical element according to any of claims 8 to 14 comprising:
deblocking the manufactured optical element from the insert by:
unlocking the heights of the at least three pins, and
increasing the height of the extremities of the at least three pins.
